# EUROPÄISCHE PATENTANMELDUNG

(11) **EP 4 356 713 A1**
(43) Veröffentlichungstag der Anmeldung: **24.04.2024**
(21) Anmeldenummer: 23201903.4
(22) Anmeldetag: 05.10.2023
(51) Int. Cl.: A01D 43/08

(54) **ERNTEVORSATZ ZUR GANZPFLANZENERNTE**

(30) Priorität: 20.10.2022 DE 102022127703
(71) Anmelder: Deere & Company, Moline, IL 61265 (US)
(72) Erfinder: Schroeder, Maximilian, Mannheim (DE); Huening, Martin, Mannheim (DE); Weitenberg, Clemens, Mannheim (DE); Schild, Jan-Dirk, Mannheim (DE); Leveling, Ralf, Mannheim (DE)
(74) Vertreter: Holst, Sönke

(57) **Zusammenfassung**

Ein Erntevorsatz (10) zur Ganzpflanzenernte umfasst Aufnahmemittel zum Aufnehmen von Pflanzen von einem Feld, ein erstes Querförderband (20) und ein zweites Querförderband (22) zur Querförderung der aufgenommenen Pflanzen in Richtung auf die Längsmittelebene des Erntevorsatzes (10), und zwei seitlich nebeneinander und der Längsmittelebene des Erntevorsatzes (10) benachbart angeordnete, zur Förderung der von den Querförderbändern (20, 22) einlaufenden Pflanzen nach hinten zu einer rückwärtigen Abgabestelle des Erntevorsatzes (10) eingerichtete Förderbänder (24, 26), die zumindest über einen Teil ihrer Länge zur Seite hin geneigt sind.

## Beschreibung

Die Erfindung betrifft einen Erntevorsatz zur Ganzpflanzenernte, der an einer Erntemaschine anbringbar und in einer Vorwärtsrichtung über ein Feld bewegbar ist, umfassend:
ein tragendes Gestell,
sich im Wesentlichen über die Breite des Erntevorsatzes erstreckende Aufnahmemittel zum Aufnehmen von Pflanzen vom Feld,
ein erstes Querförderband und ein zweites Querförderband zur Querförderung der durch die Aufnahmemittel vom Feld aufgenommenen Pflanzen in Richtung auf die Längsmittelebene des Erntevorsatzes, und
zwei seitlich nebeneinander und der Längsmittelebene des Erntevorsatzes benachbart angeordnete, zur Förderung der von den Querförderbändem einlaufenden Pflanzen nach hinten zu einer rückwärtigen Abgabestelle des Erntevorsatzes eingerichtete Förderbänder.

### Technologischer Hintergrund

Zur Ernte vollständiger, stängelartiger Pflanzen, wie Getreide oder Gras, werden im Stand der Technik unter anderem Erntevorsätze mit Querförderbändem (so genannte "Draper Belts") verwendet. Für die Getreideernte werden Schneidwerke verwendet, welche die Pflanzen mittels einer Haspel halten bzw. nach hinten fördern und mit Mähmessern abschneiden. Die abgeschnittenen, oberirdischen Teile der Pflanzen kommen auf Querförderbändem zu liegen und werden durch diese zur Mitte des Erntevorsatzes transportiert. Dort werden sie durch ein weitere Querförderband übernommen, das sie nach hinten abfördert und durch eine rückwärtige Öffnung in einen Schrägförderer abgibt. Der Schrägförderer fördert die Pflanzen in eine selbstfahrende Erntemaschine, in der Regel einen Mähdrescher.

Erntevorsätze mit Querförderbändern werden auch in Verbindung mit Feldhäckslern zur Ernte von Grüngut (Gras oder anderen stängelartigen Pflanzen) mittels einer Aufnehmertrommel oder eines Trommel- oder Scheibenmähwerks (EP 1 256 272 A1) oder unteren Schneidscheiben und koaxial darüber angeordneten Förderrotoren (DE 10 2015 206 845 A1 für die Ernte von kleineren Pflanzen als Mais) verwendet.

Der Quertransport der Pflanzen basiert bei den Querförderbändem allein auf der Wirkung der Schwerkraft. Ein potenzielles Problem ist dabei der Übergang der Pflanzen von einem der seitlich fördernden Querförderbänder auf das nach hinten fördernde Förderband. Dieser Übergang ist relativ problemlos, wenn von beiden Seiten her Pflanzen einlaufen, kann aber problematisch werden, wenn sie nur von einer einzigen Seite eintreffen, z.B. wenn abzuemtende Restbestände schmaler als die Arbeitsbreite sind oder Bestandslücken sich nur über einen Teil der Arbeitsbreite erstrecken. In solchen Fällen können die von einer Seite einlaufenden Pflanzen über das nach hinten fördernde Förderband hinausschießen und vom anderen Querförderband erfasst und nach unten eingezogen werden und darunter eine Verstopfung bilden, die vom Bediener zu beheben ist. Bei Schneidwerken für Getreide wurde vorgeschlagen, selbsttätig die Querfördergeschwindigkeit in derartigen Fällen zu vermindern, um das Problem zu vermeiden (EP 3 574 741 A1).

Ein anderer Ansatz zur Verbesserung des Übergangs der Pflanzen von den seitlichen Querförderbändem auf das nach hinten fördernde Förderband besteht darin, letzteres in zwei nebeneinander angeordnete Teile zu trennen, die V-förmig nach vom hin divergieren. Die nach hinten fördernden Förderbänder sind somit nicht genau in Vorwärtsrichtung orientiert, sondern bestehen aus zwei nach vorn und außen abgewinkelten, seitlich nebeneinander angeordneten Hälften (EP 3 298 879 A1). Hierdurch lässt sich das Problem des Überschießens bei ungleichmäßiger seitlicher Verteilung des Ernteguts nicht wirklich lösen, was analog für das aus zwei sich mit dem flexiblem Mähmesser bewegenden Teilen aufgebaute Förderband nach EP 3 473 075 A1 und die nach unten tordierten Innenabschnitte der Querförderer nach US 2020/0229347 A1 gilt.

### Aufgabe

Die vorliegende Erfindung hat sich daher zur Aufgabe gesetzt, einen mit Querförderbändern ausgestatten Erntevorsatz zur Ganzpflanzenernte bereit zu stellen, bei dem Übergangsprobleme auf das nach hinten fördernde Förderband in vermindertem Maße auftreten.

### Erfindung

Die vorliegende Erfindung wird durch die Patentansprüche definiert.

Ein Erntevorsatz zur Ganzpflanzenernte, der an einer Erntemaschine anbringbar und in einer Vorwärtsrichtung über ein Feld bewegbar ist, umfasst ein tragendes Gestell, sich im Wesentlichen über die Breite des Erntevorsatzes erstreckende Aufnahmemittel zum Aufnehmen von Pflanzen vom Feld, ein erstes Querförderband und ein zweites Querförderband zur Querförderung der durch die Aufnahmemittel vom Feld aufgenommenen Pflanzen in Richtung auf die Längsmittelebene des Erntevorsatzes, und zwei seitlich nebeneinander und der Längsmittelebene des Erntevorsatzes benachbart angeordnete, zur Förderung der von den Querförderbändem einlaufenden Pflanzen nach hinten zu einer rückwärtigen Abgabestelle des Erntevorsatzes eingerichtete Förderbänder. Die Förderbänder sind zumindest über einen Teil ihrer Länge zur Seite hin geneigt.

Auf diese Weise stoßen die in Querrichtung geförderten Pflanzen an die zur Seite hin geneigten Flächen der Förderbänder, was das Umlenken der Pflanzen erleichtert und die besagten Probleme vermeidet oder zumindest vermindert.

Die Förderbänder können jeweils um eine vordere Umlenkwalze und eine rückwärtige Umlenkwalze umlaufen, wobei die Drehachse der vorderen Umlenkwalze nach unten und außen geneigt ist. Die Drehachse der rückwärtigen Umlenkwalze kann dieselbe seitliche Neigung wie die vordere Umlenkwalze haben oder eine kleinere Neigung als die vordere Umlenkwalze aufweisen oder horizontal angeordnet sein.

Zwischen den Förderbändern kann ein Trennelement angeordnet sein, welches das Umlenken der Pflanzen nach hinten erleichtert und zudem helfen kann, ein Eindringen der Pflanzen in den Innenraum der Förderbänder zu verhindern oder zumindest zu erschweren. Das Trennelement kann sich über einen insbesondere vorderen Teilbereich der Länge der Förderbänder oder über deren gesamte Länge erstrecken. In der vertikalen Ebene kann sich das Trennelement quer zur Oberfläche des jeweils benachbarten Förderbands erstrecken.

Die Aufnahmemittel sind insbesondere als Mäh- und Einzugseinrichtungen zur Ernte von stängelartigen Pflanzen, wie Mais, ausgeführt. Bei derartig großen Pflanzen sind die besagten Umlenkprobleme noch eher als bei der Ernte von Getreide zu befürchten, sodass sich die vorliegende Erfindung bei der Ernte derartiger Pflanzen als besonders nützlich zeigt. Die Mäh- und Einzugseinrichtungen können in an sich bekannter Weise eine untere Schneidscheibe und darüber angeordnete Förderscheiben mit um ihren Umfang verteilten Aussparungen zur Aufnahme von Pflanzen aufweisen, die mittels der Schneidscheiben von ihren im Boden verbliebenden Wurzeln abgeschnitten werden. Die zugehörigen Abstreifer können das Erntegut möglichst weit außen (d.h. früh) abgeben, was Übergabeprobleme vermindern kann.

### Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung der Patentansprüche herangezogen werden dürfen. Es zeigt:
- Fig. 1: eine perspektivische Ansicht einer ersten Ausführungsform eines Erntevorsatzes zur Ganzpflanzenernte,
- Fig. 2: eine perspektivische Ansicht des mittleren Bereichs des Erntevorsatzes der Figur 1 von vorn,
- Fig. 3: eine perspektivische Ansicht des mittleren Bereichs des Erntevorsatzes der Figur 1 von hinten,
- Fig. 4: eine perspektivische Ansicht des mittleren Bereichs einer zweiten Ausführungsform eines Erntevorsatzes von vorn, und
- Fig. 5: eine perspektivische Ansicht des mittleren Bereichs einer zweiten Ausführungsform eines Erntevorsatzes von hinten.

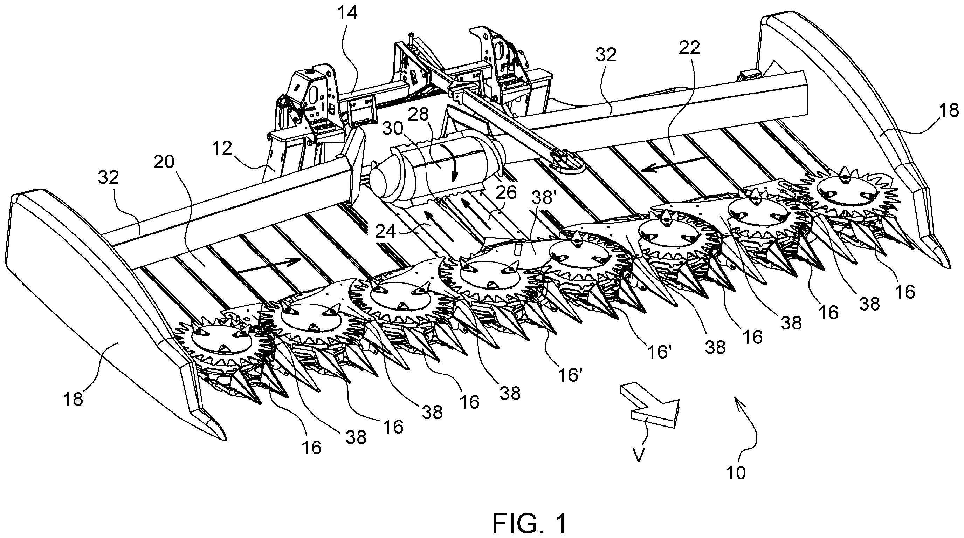

Die Figur 1 zeigt eine perspektivische Ansicht eines Erntevorsatzes 10, der sich zur Ganzpflanzenernte eignet. Der Erntevorsatz 10 baut sich auf einem tragenden Gestell 12 auf, das in der Mitte mit einem rückwärtigen Anbaurahmen 14 versehen ist. Der Anbaurahmen 14 ist zur Anbringung an einen Einzugsförderer einer selbstfahrenden Erntemaschine (nicht gezeigt) konfiguriert. Der Anbaurahmen 14 weist als Abgabestelle für die geernteten Pflanzen eine mittige Abgabeöffnung auf, durch welche von einem Feld aufgenommenes Erntegut in den Einzugsförderer abgebbar ist. Bei der Erntemaschine kann es sich insbesondere um einen Feldhäcksler handeln, dessen Einzugsförderer mit Vorpresswalzen ausgestattet ist, die das Erntegut verdichten und einer Häckseltrommel zuführen, die es im Zusammenwirken mit einer Gegenschneide in kleine Stücke zerteilt. Stromab der Häckseltrommel kann das Erntegut durch Konditionierwalzen nachbehandelt und durch einen Nachbeschleuniger in einen Auswurfkrümmer gefördert werden.

Das tragende Gestell 12 haltert an seiner Vorderseite eine Anzahl (im dargestellten Ausführungsbeispiel acht) von als Aufnahmemittel zur Aufnahme von Pflanzen von einem Feld dienenden Mäh- und Einzugseinrichtungen 16, wie sie an üblichen Erntevorsätzen zur Ernte stängelartiger Pflanzen verwendet werden. Die Mäh- und Einzugseinrichtungen 16 umfassen in an sich bekannter Weise, vgl. EP 0 760 200 A1, untere Schneidscheiben (rotierend oder feststehend) und darüber angeordnete Förderscheiben mit um ihren Umfang verteilten Aussparungen zur Aufnahme von Pflanzen, die mittels der Schneidscheiben von ihren im Boden verbliebenden Wurzeln abgeschnitten werden. Den Mäh- und Einzugseinrichtungen 16 sind kleinere Stängelteiler vorgelagert und an den äußeren seitlichen Enden des Erntevorsatzes 10 sind Seitenwände 18 mit vorgelagerten Stängelteilern angebracht. Die Mäh- und Einzugseinrichtungen 16 fördern im Erntebetrieb die Pflanzen an ihren Vorderseiten zunächst seitlich nach außen, dann nach hinten und letztlich mit ihren Rückseiten nach innen (die Richtungsangaben beziehen sich auf die Vorwärtsrichtung V des Erntevorsatzes 10, die in Figur 1 schräg nach unten und rechts verläuft). Dort werden sie durch Abstreifer 38 aus den Aussparungen (bezüglich der Drehrichtung der Mäh- und Einzugseinrichtungen 16) nach außen bzw. hinten hinausgehoben und von der Rückseite einer nach innen folgenden Mäh- und Einzugseinrichtung 16 übernommen und/oder gelangen, insbesondere durch von vorn einlaufende Pflanzen nach hinten gedrückt, auf ein Querförderband 20, 22 oder ein mittiges Förderband 24, 26, das sie nach hinten und durch die Abgabeöffnung fördert. Rückwärtig der Querförderbänder 20, 22 sind Rückwände 32 vorgesehen. Insbesondere bei den beiden der Längsmittelebene des Erntevorsatzes 10 direkt benachbarten Mäh- und Einzugseinrichtungen 16' kann durch geeignete Anbringung der Abstreifer 38` erreicht werden, dass diese Mäh- und Einzugseinrichtungen 16' ihr Erntegut möglichst früh (gegenüber der Drehachse der Mäh- und Einzugseinrichtung 16' nach außen hin versetzt) abgeben, um Übergabeprobleme an die (im Falle der geneigten, vgl. unten) mittigen (und somit in ihrer Mitte vertikal etwas höher als die Förderbänder 20, 22 liegenden) Förderbänder 24, 26 zu vermeiden. Analog können auch die anderen Mäh- und Einzugseinrichtungen 16 ihr Erntegut möglichst früh (gegenüber der Drehachse der Mäh- und Einzugseinrichtungen 16 nach außen hin versetzt) ihr Erntegut an die Förderbänder 20, 22 abgeben.

Oberhalb der mittigen Förderbänder 24, 26 ist, der rückwärtigen Abgabeöffnung vorgelagert, eine als Zylinder mit konischen Enden ausgeführte Walze 28 vorgesehen, welche das Einführen der Pflanzen in die Abgabeöffnung erleichtert. Die konischen Enden der Walze 28 sind mit wendelförmigen Mitnehmern versehen, während der mittige, zylindrische Teil der Walze 28 mit sich axial erstreckenden Mitnehmern ausgestattet ist. Die Walze 28 kann in Richtung des dargestellten Pfeils angetrieben werden oder sich frei mitdrehen.

Der Erntevorsatz 10 dient somit, da die kompletten, abgeschnittenen Pflanzen in die Erntemaschine gefördert werden, zur Ganzpflanzenernte von größeren stängelartigen Pflanzen, wie Mais. Die Mäh- und Einzugseinrichtungen 16 können (ggf. mit geringfügigen Modifikationen, vgl. EP 0 824 856 A2) auch zur Einbringung so genannter Ganzpflanzensilage, d.h. von Getreidepflanzen, dienen. Es wäre auch möglich, die Mäh- und Einzugseinrichtungen 16 als Aufnahmemittel durch Mähelemente nach DE 10 2015 206 845 A1 mit unteren Schneid- und oberen Förderscheiben zu ersetzen, um kleinere Pflanzen als Mais zu ernten. Für die Getreideernte (bei der der gezeigte Erntevorsatz 10 mit einer Haspel versehen, d.h. als sogenanntes Draper-Belt-Schneidwerk ausgeführt sein, und auch an einem Schrägförderer eines Mähdreschers angebracht werden kann) könnte auch ein üblicher Mähwerksbalken verwendet werden und für die Grasernte eine Anzahl nebeneinander angeordneter Mähscheiben oder -trommeln oder eine sich über die Breite erstreckende Aufsammeltrommel (s. EP 1 256 272 A1).

Die (bezüglich der Vorwärtsrichtung V horizontal oder leicht nach vom und unten geneigt angeordneten) Querförderbänder 20, 22 bewegen sich im Erntebetrieb mit ihren Oberseiten nach innen, während die (bezüglich der Vorwärtsrichtung V horizontal oder leicht nach vom und unten geneigt angeordneten) Förderbänder 24, 26 sich dann mit ihren Oberseiten nach hinten bewegen, wie in der Figur 1 durch die Pfeile angedeutet. Der Antrieb der Mäh- und Einzugseinrichtungen 16 sowie der Querförderbänder 20, 22 und der Förderbänder 24, 26 kann über einen mechanischen Antriebsstrang von der den Erntevorsatz 10 tragenden Erntemaschine oder durch zugeordnete Elektro- oder Hydraulikmotoren (nicht gezeigt) erfolgen, die eine Verstellung der Fördergeschwindigkeit und eine Anpassung an die Fördergeschwindigkeit im Einzugskanal der den Erntevorsatz 10 über das Feld bewegenden Erntemaschine und somit an die Schnittlänge ermöglichen.

Ein potenzielles Problem des Erntevorsatzes 10 liegt im Übergang der Pflanzen von den Querförderbändem 20, 22 auf die nach hinten fördernden Förderbänder 24, 26. Bei diesem Übergang werden die Pflanzen um 90° nach hinten umgelenkt. Insbesondere wenn, wie eingangs erwähnt, nicht von beiden Querförderbändern Pflanzen einlaufen (oder größere Unterschiede in den jeweils einlaufenden Materialströmen vorliegen) ist ein Überschießen von Pflanzen von einem Querförderband 20 oder 22 über die Förderbänder 24, 26 möglich, sodass die Pflanzen auf das jeweils andere Querförderband 22 oder 20 gelangen und unter ungünstigen Umständen von diesem nach unten eingezogen werden und sich ein Stau ergibt, der durch den Bediener von Hand zu entfernen ist. Wenn sich kein Stau ergibt, ist jedoch zumindest ein ungleichmäßiger Gutfluss zu befürchten.

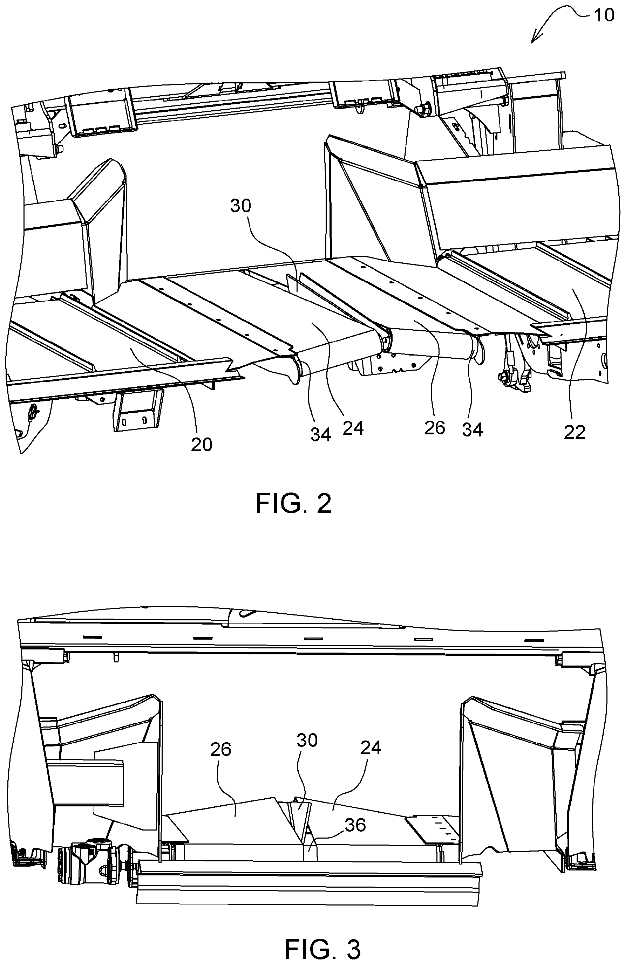

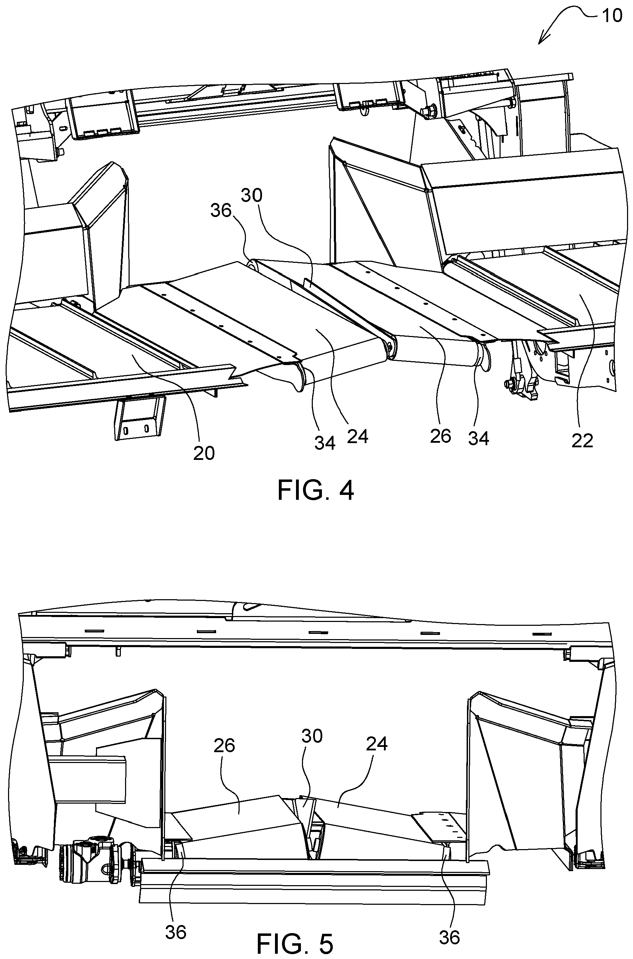

Zur Lösung oder zumindest Verminderung dieses Problems sind die nach hinten fördernden Förderbänder 24, 26 nicht, wie bisher üblich, einteilig und sich einer einzigen Ebene erstreckend angeordnet, sondern sind zumindest über einen Teil ihrer in Vorwärtsrichtung gemessenen Länge in sich nach außen geneigt. Die beiden nach hinten fördernden Förderbänder 24, 26 sind mit anderen Worten in einem spitzen Winkel zueinander und zur Horizontalen angeordnet, sodass sie eine Dachform (umgekehrtes V) bilden. Dazu können (nur) die vorderen Umlenkwalzen 34 der Förderbänder 24, 26 schräg nach außen und unten geneigte Drehachsen aufweisen, wie bei der ersten Ausführungsform nach Figur 1 bis 3, oder auch die hinteren Umlenkwalzen 36 der Förderbänder 24, 26 sind mit nach außen und unten geneigten Drehachsen versehen, wie bei der zweiten Ausführungsform nach Figur 4 und 5. Bei der ersten Ausführungsform sind die Förderbänder 24, 26 somit in sich tordiert, während sie bei der zweiten Ausführungsform nicht tordiert sind. Es sind auch Zwischenformen möglich, bei denen die Drehachsen sowohl der hinteren Umlenkwalzen 36 als auch der vorderen Umlenkwalzen 34 nach außen und unten geneigt sind, jedoch mit geringeren Neigungswinkeln der hinteren Umlenkwalzen 36 gegenüber den vorderen Umlenkwalzen 34.

Ein Ablaufen der Förderbänder 24, 26 von den Umlenkwalzen 34, 36 kann bei sämtlichen Ausführungsformen durch zusammenwirkende Merkmale der Umlenkwalzen 34, 36 und der Förderbänder 24, 26 erzielt werden, z.B. Vertiefungen in den Umlenkwalzen 34, 36, in welche überstehende Elemente an der Innenseite der Förderbänder 24, 26 eindringen.

Man erreicht durch die zur Seite hin geneigten Förderbänder 24, 26, dass der von den Querförderbändem 20, 22 einlaufende Pflanzenstrom mit nach den innen und oben geneigten Förderbändern 24, 26 zusammenwirkt. Dadurch liegen die jeweils unten im Materialstrom liegenden Pflanzen nicht nur auf den Förderbändern 24, 26 auf, sondern werden mit einer gewissen Anpresskraft gegen die Förderbänder 24, 26 gedrückt. Durch die sich hierbei ergebende Normalkraft (d.h. quer zur Förderrichtung der Förderbänder 24, 26 gerichtete Kraft) wird das Umlenken der Pflanzen nach hinten erleichtert.

Ein Überschießen der Pflanzen auf die jeweils andere Seite kann durch ein Trennelement 30 vermieden oder vermindert werden, das sich in seitlicher Richtung zwischen den beiden Förderbändern 24, 26 erstreckt. Wie in den Figuren gezeigt, kann das Trennelement 30 als umgekehrtes V ausgeführt sein. Dadurch erstrecken sich die seitlichen Flächen des Trennelements 30 in der vertikalen Ebene jeweils quer zur Drehachse der vorderen Umlenkwalze 34, was zu vermeiden hilft, dass Erntegut in den Innenraum der Förderbänder 24, 26 gelangt. Das Trennelement 30 kann sich über einen (insbesondere den vorderen) Teilbereich der Länge der Förderbänder 24, 26 erstrecken, wie in den Figuren dargestellt, z.B. über die vordere Hälfte (bzw. unmittelbar vor der der Walze 28 enden), oder über deren gesamte Länge.

In den Figuren erstrecken sich die Längsachsen der Förderbänder 24, 26 parallel zur Vorwärtsrichtung V. Man könnte sie auch in V-Form anordnen, wie in EP 3 298 879 A1.

## Patentansprüche

1. Erntevorsatz (10) zur Ganzpflanzenernte, der an einer Erntemaschine anbringbar und in einer Vorwärtsrichtung (V) über ein Feld bewegbar ist, umfassend:
ein tragendes Gestell (12),
sich im Wesentlichen über die Breite des Erntevorsatzes erstreckende Aufnahmemittel zum Aufnehmen von Pflanzen vom Feld,
ein erstes Querförderband (20) und ein zweites Querförderband (22) zur Querförderung der durch die Aufnahmemittel vom Feld aufgenommenen Pflanzen in Richtung auf die Längsmittelebene des Erntevorsatzes (10), und
zwei seitlich nebeneinander und der Längsmittelebene des Erntevorsatzes (10) benachbart angeordnete, zur Förderung der von den Querförderbändem (20, 22) einlaufenden Pflanzen nach hinten zu einer rückwärtigen Abgabestelle des Erntevorsatzes (10) eingerichtete Förderbänder (24, 26),
**dadurch gekennzeichnet, dass** die Förderbänder (24, 26) zumindest über einen Teil ihrer Länge zur Seite hin geneigt sind.

2. Erntevorsatz (10) nach Anspruch 1, wobei die Förderbänder (24, 26) jeweils um eine vordere Umlenkwalze (34) und eine rückwärtige Umlenkwalze (36) umlaufen und die Drehachse der vorderen Umlenkwalze (34) nach unten und außen geneigt ist.

3. Erntevorsatz (10) nach Anspruch 2, wobei die Drehachse der rückwärtigen Umlenkwalze (36) dieselbe seitliche Neigung wie die vordere Umlenkwalze (34) aufweist oder eine kleinere Neigung aufweist als die vordere Umlenkwalze (34) oder horizontal angeordnet ist.

4. Erntevorsatz (10) nach einem der Ansprüche 1 bis 3, wobei zwischen den Förderbändern (24, 26) ein Trennelement (30) angeordnet ist.

5. Erntevorsatz (10) nach Anspruch 4, wobei sich das Trennelement (30) sich über einen insbesondere vorderen Teilbereich der Länge der Förderbänder (24, 26) oder über deren gesamte Länge erstreckt.

6. Erntevorsatz (10) nach Anspruch 4 oder 5, wobei das Trennelement (30) sich quer zur Oberfläche des jeweils benachbarten Förderbands (24, 26) erstreckt.

7. Erntevorsatz (10) nach einem der vorhergehenden Ansprüche, wobei die Aufnahmemittel als Mäh- und Einzugseinrichtungen (16, 16') zur Ernte von stängelartigen Pflanzen, wie Mais, ausgeführt sind.

8. Erntevorsatz (10) nach Anspruch 7, wobei die Mäh- und Einzugseinrichtungen (16, 16`) jeweils eine untere Schneidscheibe und darüber angeordnete Förderscheiben mit um ihren Umfang verteilten Aussparungen zur Aufnahme von Pflanzen aufweisen, die mittels der Schneidscheiben von ihren im Boden verbliebenden Wurzeln abgeschnitten werden.

9. Erntevorsatz (10) nach Anspruch 7 oder 8, wobei den Mäh- und Einzugseinrichtungen (16, 16') jeweils Abstreifer (38, 38') zugeordnet sind, die im Betrieb die Pflanzen aus den mit ihren Rückseiten in Richtung auf die Längsmittelebene des Erntevorsatzes (10) hin drehenden Förderscheiben herausnehmen, wo die Pflanzen von den nachgeordneten Querförderbändern (20, 22) oder Förderbänder (24, 26) übernommen werden, und die Abstreifer (38, 38') zumindest der der Längsmittelebene direkt benachbarten, vor den Förderbändern (24, 26) angeordneten Mäh- und Einzugseinrichtungen (16`) derart angeordnet sind, dass die Abgabestelle gegenüber der Drehachse der Mäh- und Einzugseinrichtungen (16, 16') nach außen hin versetzt ist.

## Geänderte Patentansprüche

### Geänderte Patentansprüche gemäss Regel 137(2) EPÜ.

1. Erntevorsatz (10) zur Ganzpflanzenernte, der an einer Erntemaschine anbringbar und in einer Vorwärtsrichtung (V) über ein Feld bewegbar ist, umfassend:
ein tragendes Gestell (12),
sich im Wesentlichen über die Breite des Erntevorsatzes (10) erstreckende Aufnahmemittel zum Aufnehmen von Pflanzen vom Feld,
ein erstes Querförderband (20) und ein zweites Querförderband (22) zur Querförderung der durch die Aufnahmemittel vom Feld aufgenommenen Pflanzen in Richtung auf die Längsmittelebene des Erntevorsatzes (10), und
zwei seitlich nebeneinander und der Längsmittelebene des Erntevorsatzes (10) benachbart angeordnete, zur Förderung der von den Querförderbändern (20, 22) einlaufenden Pflanzen nach hinten zu einer rückwärtigen Abgabestelle des Erntevorsatzes (10) eingerichtete Förderbänder (24, 26),
**dadurch gekennzeichnet, dass** die Förderbänder (24, 26) jeweils zumindest über einen Teil ihrer Länge gegenüber der Richtung, in welcher die Querförderung der Pflanzen durch die Querförderbänder (20, 22) erfolgt, zur Seite hin nach unten und außen geneigt sind.

2. Erntevorsatz (10) nach Anspruch 1, wobei die Förderbänder (24, 26) jeweils um eine vordere Umlenkwalze (34) und eine rückwärtige Umlenkwalze (36) umlaufen und die Drehachse der vorderen Umlenkwalze (34) jeweils gegenüber der Richtung, in welcher die Querförderung der Pflanzen durch die Querförderbänder (20, 22) erfolgt, nach unten und außen geneigt ist.

3. Erntevorsatz (10) nach Anspruch 2, wobei die Drehachse der rückwärtigen Umlenkwalze (36) dieselbe seitliche Neigung wie die vordere Umlenkwalze (34) aufweist oder eine kleinere Neigung aufweist als die vordere Umlenkwalze (34) oder horizontal angeordnet ist.

4. Erntevorsatz (10) nach einem der Ansprüche 1 bis 3, wobei zwischen den Förderbändern (24, 26) ein Trennelement (30) angeordnet ist.

5. Erntevorsatz (10) nach Anspruch 4, wobei sich das Trennelement (30) über einen insbesondere vorderen Teilbereich der Länge der Förderbänder (24, 26) oder über deren gesamte Länge erstreckt.

6. Erntevorsatz (10) nach Anspruch 4 oder 5, wobei das Trennelement (30) sich quer zur Oberfläche des jeweils benachbarten Förderbands (24, 26) erstreckt.

7. Erntevorsatz (10) nach einem der vorhergehenden Ansprüche, wobei die Aufnahmemittel als Mäh- und Einzugseinrichtungen (16, 16`) zur Ernte von stängelartigen Pflanzen, wie Mais, ausgeführt sind.

8. Erntevorsatz (10) nach Anspruch 7, wobei die Mäh- und Einzugseinrichtungen (16, 16') jeweils eine untere Schneidscheibe und darüber angeordnete Förderscheiben mit um ihren Umfang verteilten Aussparungen zur Aufnahme von Pflanzen aufweisen, die mittels der Schneidscheiben von ihren im Boden verbliebenden Wurzeln abgeschnitten werden.

9. Erntevorsatz (10) nach Anspruch 7 oder 8, wobei den Mäh- und Einzugseinrichtungen (16, 16') jeweils Abstreifer (38, 38') zugeordnet sind, die im Betrieb die Pflanzen aus den mit ihren Rückseiten in Richtung auf die Längsmittelebene des Erntevorsatzes (10) hin drehenden Förderscheiben herausnehmen, wo die Pflanzen von den nachgeordneten Querförderbändern (20, 22) oder Förderbänder (24, 26) übernommen werden, und die Abstreifer (38, 38') zumindest der der Längsmittelebene direkt benachbarten, vor den Förderbändern (24, 26) angeordneten Mäh- und Einzugseinrichtungen (16') derart angeordnet sind, dass die Abgabestelle gegenüber der Drehachse der Mäh- und Einzugseinrichtungen (16, 16') nach außen hin versetzt ist.
